# EUROPEAN PATENT SPECIFICATION

(11) **EP 3 496 092 B1**
(45) Date of publication and mention of the grant of the patent: **23.12.2020**
(21) Application number: 18207016.9
(22) Date of filing: 19.11.2018
(51) Int. Cl.: G10L 15/18

(54) **VOICE PROCESSING APPARATUS, VOICE PROCESSING METHOD AND PROGRAM**
SPRACHVERARBEITUNGSVORRICHTUNG, SPRACHVERARBEITUNGSVERFAHREN UND PROGRAMM
APPAREIL DE TRAITEMENT VOCAL, PROCÉDÉ DE TRAITEMENT VOCAL ET PROGRAMME

(30) Priority: 05.12.2017 JP 2017233310
(43) Date of publication of application: 12.06.2019
(73) Proprietor: Casio Computer Co., Ltd., Tokyo 151-8543 (JP)
(72) Inventor: TOMITA, Hiroki, Hamura-shi, Tokyo 205-8555 (JP)
(74) Representative: Grünecker Patent- und Rechtsanwälte PartG mbB

(56) References cited:
- US-A1- 2004 030 552
- US-A1- 2007 162 281
- US-A1- 2016 078 860
- US-A1- 2016 171 973
- US-A1- 2017 032 779
- OHTSUKI K ET AL: "Unsupervised Vocabulary Expansion for Automatic Transcription of Broadcast News", 2005 IEEE INTERNATIONAL CONFERENCE ON ACOUSTICS, SPEECH, AND SIGNAL PROCESSING - 18-23 MARCH 2005 - PHILADELPHIA, PA, USA, IEEE, PISCATAWAY, NJ, vol. 1, 18 March 2005 (2005-03-18), pages 1021-1024, XP010792214, DOI: 10.1109/ICASSP.2005.1415290 ISBN: 978-0-7803-8874-1
- EGOROVA EKATERINA ET AL: "Out-of-Vocabulary Word Recovery using FST-Based Subword Unit Clustering in a Hybrid ASR System", 2018 IEEE INTERNATIONAL CONFERENCE ON ACOUSTICS, SPEECH AND SIGNAL PROCESSING (ICASSP), IEEE, 15 April 2018 (2018-04-15), pages 5919-5923, XP033401537, DOI: 10.1109/ICASSP.2018.8462221 [retrieved on 2018-09-10]

## Description

The present invention relates to a voice processing apparatus, a voice processing method and a program.

In a system of voice recognition, an unknown-word, which is not registered in a voice word dictionary, cannot be recognized. Thus, even if the same content is input repeatedly, the system side cannot recognize the same content unless and until the unknown-word is registered in the dictionary.

In order to improve the recognition rate in this situation, there has been proposed a technique in which an unknown-word portion is detected by using both recognition of continuously spoken words and subword recognition of a phoneme or a syllable, and the unknown-word portion is registered in the dictionary (see, e.g. Jpn. Pat. Appln. KOKAI Publication No. 2004-170765).

The technique disclosed in the above Jpn. Pat. Appln. KOKAI Publication No. 2004-170765 relates to a process which is executed for a one-time input voice, and does not deal with a repeatedly input voice of an unknown-word. This technique does not aim at improving the recognition rate in this case.

US 2016/078860 A1 relates to a method for determining unknown terms in automatic speech recognition, wherein terms not in a vocabulary may be identified and stored based on a determined frequency of occurrence.

An approach for introducing out-of-vocabulary words into a dictionary of an automatic speech recognizer using a clustering concept is disclosed in Egorova, Ekaterina et al.: "Out-of-Vocabulary Word Recovery using FST-Based Subword Unit Clustering in a Hybrid ASR System", IEEE International Conference on Acoustics, Speech and Signal Processing (ICASSP), 15 April 2018, pages 5919-5923.

The present invention has been made in consideration of the above circumstance, and the object of the invention is to improve a recognition rate in a case in which voices of similar unknown-words are repeatedly input.

This is achieved by the features of the independent claims.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.
FIG. 1 is a block diagram illustrating a functional configuration of a voice processing circuit according to an embodiment of the present invention;
FIG. 2 is a flowchart illustrating process contents including voice recognition according to the embodiment; and
FIGS. 3A, 3B and 3C illustrate, in a stepwise manner, rearrangement of recognition results of unknown-words according the embodiment.

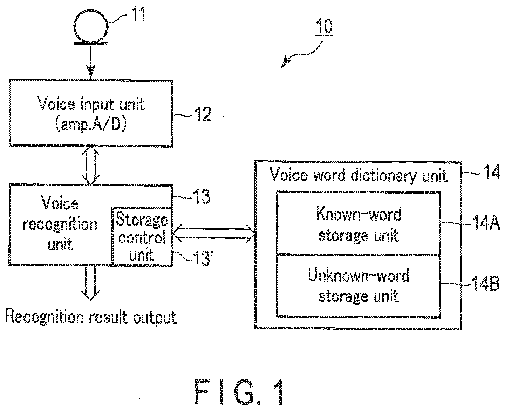

Hereinafter, referring to the accompanying drawings, a description will be given of an embodiment in which the present invention is applied to a voice processing circuit which is mounted in a pet robot. FIG. 1 is a block diagram illustrating, in an extracted manner, a functional configuration of a voice processing circuit 10 according to the present embodiment. In FIG. 1, a voice input unit 12 executes processes, such as amplification and A/D conversion, on an analog voice signal acquired by a microphone 11, thereby converting the analog voice signal to digital data, and the voice input unit 12 outputs the obtained digital data to a voice recognition unit 13.

The voice recognition unit 13 extracts phonemes and syllables by, for example, dynamic programming (DP) matching, and executes voice recognition by referring to a voice word dictionary unit 14. Character data corresponding to the phonemes or syllables, which are a recognition result, is output, as needed, as data corresponding to input voice in an application program which is using this voice recognition process.

The voice word dictionary unit 14 includes a known-word storage unit 14A which stores a phoneme or syllable of voice of a known-word and character data corresponding to the phoneme or syllable, and an unknown-word storage unit 14B which stores a phoneme or syllable of voice of an unknown-word and character data corresponding to the phoneme or syllable.

Note that the above-described voice recognition unit 13 represents, as a circuit block, a voice recognition function which is mounted in an operating system (OS) in, for example, a pet robot. Actually, the voice recognition unit 13 is realized by the execution of the OS by a CPU of the pet robot. Alternatively, the voice recognition unit 13 may be provided as a hardware circuit by a purpose-specific LSI that is independent from the CPU. The voice recognition unit 13 is provided with a storage control unit 13' which executes storage control to the known-word storage unit 14A and unknown-word storage unit 14B.

Next, an operation of the above-described embodiment will be described.

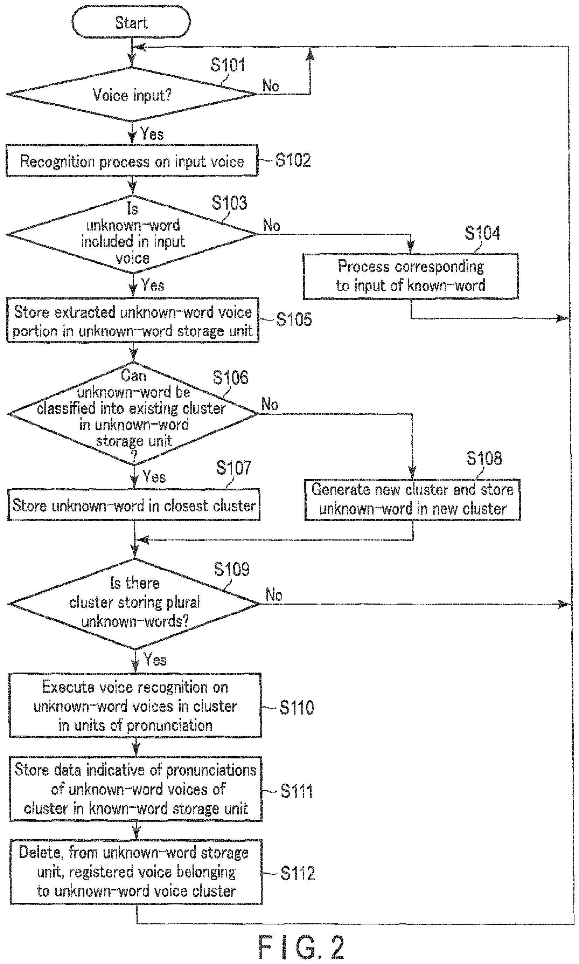

FIG. 2 is a flowchart illustrating process contents including a recognition process for a voice input, the recognition process being executed mainly by the voice recognition unit 13 and storage control unit 13' under the control of the CPU.

At the beginning of the process, the voice recognition unit 13 repeatedly determines whether voice data is input via the microphone 11 and voice input unit 12 (step S101), thereby standing by for an input of voice data.

When the voice data is input, a person extraction process may be executed to extract a person from image data acquired by a camera unit (not shown) which the pet robot that is equipped with the present voice processing circuit 10 includes, or the microphone 11 may be configured to have an array structure of microphones. Thereby, the direction of a speaker may be estimated, and voice from the estimated direction may be determined to be voice is uttered toward the pet robot.

Then, at a time point when it is determined that voice data from the voice input unit 12 is input (Yes in step S101), the voice recognition unit 13 executes a recognition process for the input voice data (step S102) .

The voice recognition unit 13 refers to the known-word storage unit 14A of the voice word dictionary unit 14 and determines whether an unknown-word is included in the result obtained by the recognition (step S103).

At the time of detecting an unknown-word, for example, such existing methods as recognition of continuously spoken words and subword recognition of a phoneme or syllable are executed. One of the recognition results of these methods, which has a higher likelihood in the subword recognition is recognized as an unknown-word.

If no unknown-word is included in recognition results and it is determined that all recognition results can be recognized as known-words (No in step S103), the voice recognition unit 13 executes a prescribed process corresponding to character data of the recognition results by these known-words (step S104) and then returns to the process from step S101 to stand by for the next voice input.

On the other hand, in step S103, if it is determined that at least one unknown-word is included in the recognition results (Yes in step S103), the voice recognition unit 13 extracts character data of a phoneme or syllable of the unknown-word portion, and stores the character data in the unknown-word storage unit 14B of the voice word dictionary unit 14 by the storage control unit 13' (step S105).

Here, the voice recognition unit 13 calculates a distance of a characteristic amount between the unknown-word to be stored and each of clusters of other unknown-words which are already stored in the unknown-word storage unit 14B at this time point. Based on whether there is a cluster with the characteristic amount that is within a predetermined distance, the voice recognition unit 13 determines whether the unknown-word to be stored can be classified into the already existing cluster (step S106).

In addition, as regards whether the unknown-word to be stored can be classed into the already existing cluster or not, this may also be determined based on whether the distance between recognition results of subwords or the distance between score strings of maximum likelihood phoneme strings of the respective phoneme likelihoods of the respective frames is a preset threshold or less.

If it is determined that there is a cluster with the characteristic amount that is within a predetermined distance and the unknown-word to be stored can be classified into the already existing cluster (Yes in step S106), the voice recognition unit 13 controls the storage control unit 13' to store the character data of the phoneme or syllable of the unknown-word in the cluster with the shortest distance of the characteristic amount (step S107).

On the other hand, in step S106, if it is determined that there is no cluster with characteristic amount that is within the predetermined distance and the unknown-word to be stored cannot be classified into the already existing cluster (No in step S106), the voice recognition unit 13 generates a new cluster in the unknown-word storage unit 14B and controls the storage control unit 13' to store the character data of the phoneme or syllable of the unknown-word in the newly generated cluster (step S108).

Thereafter, the voice recognition unit 13 determines whether a cluster, which stores a plurality of unknown-words, exists in the unknown-word storage unit 14B of the voice word dictionary unit 14 (step S109) .

If no cluster, which stores a plurality of unknown-words, exists in the unknown-word storage unit 14B (No in step S109), the voice recognition unit 13 returns to the process from step S101 to stand by for the next voice input.

In step S109, if a cluster, which stores a plurality of unknown-words, exists in the unknown-word storage unit 14B (Yes in step S109), the voice recognition unit 13 executes voice recognition, in units of pronunciation, on the character data of voices of unknown-words in the corresponding cluster in the unknown-word storage unit 14B (step S110).

The voice recognition unit 13 controls the storage control unit 13' to store, in the known-word storage unit 14A, data indicative of pronunciations of voices of the unknown-words in the corresponding cluster (step Sill).

After the unknown-words are registered in the known-word storage unit 14A, the voice recognition unit 13 controls the storage control unit 13' to delete the data relating to the voices of the unknown-words, which was registered in the known-word storage unit 14A, from the unknown-word storage unit 14B (step S112). Thereafter, the voice recognition unit 13 returns to the process from step S101 to stand by for the next voice input.

After the unknown-words are registered in the known-word storage unit 14A, if the (previous) unknown-word is input, the voice recognition unit 13 calculates, like the process by normal voice recognition, the likelihoods in pronunciations of the known-words stored by registration in the known-word storage unit 14A, and compares the (previous) unknown-word with other words. Thereby, the voice recognition unit 13 can detect that the (previous) unknown-word, which was registered as the known-word, has been spoken to the voice processing circuit 10.

In this manner, contents recognized as unknown-words as results of voice recognition are clustered as needed, and accumulated and stored, and the stored contents are rearranged. Thereby, an unknown-word, which can be determined to have a very short distance of a characteristic amount, compared to other unknown-words, is registered as a known-word. Thereby, the recognition rate in voice recognition of subsequently input similar previous unknown-words can be improved.

In the meantime, in the above-described embodiment, in a state in which no unknown-word is stored in the unknown-word storage unit 14B, when a first unknown-word is stored, the first unknown-word may be stored without generating a cluster. When the characteristic amount of a next extracted unknown-word is similar to the characteristic amount of the first stored unknown-word, the unknown-words may be registered in the known-word storage unit 14A as the known-words. When the characteristic amount of the next extracted unknown-word is not similar to the characteristic amount of the first stored unknown-word, their respective clusters may be generated.

In addition, in the above-described step S109, the voice recognition unit 13 determines whether a cluster, which stores a plurality of unknown-words, exists in the unknown-word storage unit 14B of the voice word dictionary unit 14. Alternatively, the voice recognition unit 13 may determine whether a cluster that stores a number of unknown-words, which is equal to or greater than a preset threshold N, exists in the unknown-word storage unit 14B of the voice word dictionary unit 14. If the cluster that stores a number of unknown-words, which is equal to or greater than the preset threshold N, exists in the unknown-word storage unit 14B, the voice recognition unit 13 may execute voice recognition in step S110, in units of pronunciation, on the character data of voices of the unknown-words in the corresponding cluster in the unknown-word storage unit 14B.

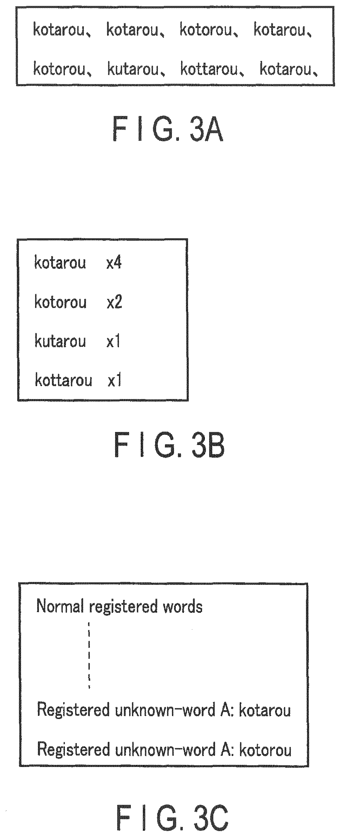

FIG. 3A illustrates eight recognition results including syllables "kotarou" with an edit distance of "1". When recognition results within this edit distance are included in an identical cluster, it is assumed that all the recognition results are treated as the identical cluster.

FIG. 3B illustrates a result in which the eight recognition results of FIG. 3A are rearranged in units of pronunciation. There are four occurrences of "kotarou", which occurs most frequently, and there are two occurrences of "kotorou", which occurs second most frequently.

In step S111, when only the pronunciation of the first rank of the frequency of occurrence is registered (M = 1), only "kotarou" is registered in the known-word storage unit 14A. In addition, when the pronunciations of the first and second ranks of the frequency of occurrence are registered (M = 2), both "kotarou" and "kotorou" are registered in the known-word storage unit 14A.

FIG. 3C is a view illustrating a state in which both "kotarou" and "kotorou" that are previous unknown-words are stored as "registered unknown-words A" in the known-word storage unit 14A.

Note that, as character data which the voice recognition unit 13 outputs as results of voice recognition by referring to the known-word storage unit 14A, the recognition results "kotarou" and "kotorou", which were input, accumulated and stored in the unknown-word storage unit 14B, may be distinguishably converted to character data and the character data may be output.

On the other hand, depending on the setting of the system of the voice processing circuit 10, as regards the contents stored in the same cluster of the unknown-word storage unit 14B, the character data of the first rank in the contents, e.g., "kotarou" may be treated as representative character data. Even if the word having the shortest distance as the registered unknown-word stored in the known-word storage unit 14A is "kotorou", "kotarou" may be output as the recognition result to a rear-stage circuit of the voice recognition unit 13.

In addition, in the above-described step S109, the voice recognition unit 13 may determine whether a cluster, which stores a plurality of unknown-words, exists in the unknown-word storage unit 14B of the voice word dictionary unit 14, at a preset time instant, for example, at a time instant in the midnight when the pet robot would surely be in a non-used state. If a cluster, which stores a plurality of unknown-words, exists in the unknown-word storage unit 14B, the voice recognition unit 13 may execute the processes of step S110 to step S112 at the preset time instant.

According to the present embodiment which was described above in detail, the recognition rate in a case in which voices of similar unknown-words were repeatedly input can be improved.

Additionally, in the above-described embodiment, the process is executed to extract a part of unknown-words with a high input frequency and to register the part of unknown-words as known-words, at a timing corresponding to at least either the total number of unknown-words which are determined to have relatively short distances of a characteristic amount and accumulated and stored in the same cluster, or the preset time instant. By executing the process quantitatively or at fixed time intervals, the contents of the known-word storage unit 14A are updated and stored in accordance with the condition of use of the voice processing circuit 10. Thus, a voice recognition environment, which is optimized for a user who uses the apparatus equipped with the voice processing circuit 10, can be constructed.

Additionally, in the embodiment, an unknown-word, which is to be registered as a known-word, is selected in accordance with the ranking of the frequency of occurrence in the cluster in which unknown-words determined to have relatively short distances of a characteristic amount are accumulated and stored. In addition to this, an absolute value of the frequency of occurrence of an unknown-word that is selected as a known-word may also be set.

In this manner, by making it possible to discretionarily set the selection condition at the time of selecting an unknown-word from among unknown-words and registering the unknown-word as a known-word, a voice recognition environment, which the user has optimized in accordance with the environment of use of the user himself/herself, can be constructed.

Although not described in the above embodiment, in the voice word dictionary unit 14, voice pattern data of a plurality of speakers may be stored. At the time of the voice recognition process which the voice recognition unit 13 executes, speaker recognition may also be executed, and a cluster of unknown-words may be stored on a speaker-by-speaker basis. Thereby, the recognition rate can be further improved at the time of registering an unknown-word as a known-word from among accumulated and stored results of unknown-words.

Additionally, in the embodiment, voice data is stored in the known-word storage unit 14A and unknown-word storage unit 14B of the voice word dictionary unit 14. Alternatively, text data, to which the voice data is converted, may be stored.

Additionally, in the embodiment, unknown-words, which the voice recognition unit 13 extracted, are classified into clusters in accordance with the degree of similarity and stored in the unknown-word storage unit 14B. Based on the number of unknown-words of each of the clusters into which the unknown-words were classified and stored, a corresponding unknown-word is registered in the known-word storage unit 14A as a known-word. Alternatively, unknown-words may not be classified into clusters, and unknown-words, which the voice recognition unit 13 extracted, may be stored in the unknown-word storage unit 14B as such. When the number of unknown-words stored in the unknown-word storage unit 14B meets a predetermined condition, a corresponding unknown-word may be registered in the known-word storage unit 14A as a known-word.

Additionally, in the embodiment, each time the voice recognition unit 13 extracts an unknown-word, all extracted unknown-words, for instance, "kotarou", "kotarou", "kotorou", "kotarou", "kotorou", "kutarou", "kottarou" and "kotarou", are stored in the unknown-word storage unit 14B. Alternatively, instead of storing the unknown-words in the unknown-word storage unit 14B, information of the number of unknown-words, in which an extracted unknown-word and the number of times of extraction of the unknown-word are associated, may be managed. This information indicates, for example, that "kotarou" was extracted four times, "kotorou" was extracted two times, "kutarou" was extracted once, and "kottarou" was extracted once.

Additionally, in the embodiment, the unknown-word storage unit 14B, which stores unknown-words extracted by the voice recognition unit 13, is provided. Alternatively, the unknown-word storage unit 14B may not be provided, and, as described above, the information of the number of unknown-words, in which the extracted unknown-word and the number of times of extraction of the unknown-word are associated, may be managed. When the number of times of extraction of an unknown-word meets a predetermined condition, this unknown-word may be registered in the known-word storage unit 14A as a known-word.

Besides, the present invention is not limited to the above-described embodiments. In practice, various modifications may be made without departing from the scope of the invention. The embodiments can be combined and implemented, and the combined advantages can be obtained in such cases. Furthermore, various embodiments can be derived from combinations of structural elements selected from the structural elements disclosed herein. For example, even if some structural elements are omitted from all the structural elements disclosed in the embodiments, if the problem can be solved and advantageous effect can be obtained, the structure without such structural elements can be derived as an embodiment if it falls under the scope as defined by the independent claims.

## Claims

1. A voice processing apparatus comprising:
a first storage unit (14A) which is configured to store a known-word;
a voice recognition unit (13) which is configured to extract an unknown-word by executing a voice recognition process on an input voice signal, based on a storage content of the first storage unit (14A); and
a storage control unit (13') which is configured to execute storage control to the first storage unit (14A),
wherein the storage control unit (13') is configured to store, when information of a number of unknown-words which are recognized to be identical, among unknown-words extracted by the voice recognition unit (13), meets a predetermined condition, a corresponding unknown-word in the first storage unit (14A) as a known-word;
a second storage unit (14B);
wherein the storage control unit (13') further is configured to execute storage control to the second storage unit (14B), and to classify the unknown-words extracted by the voice recognition unit (13),
wherein
the voice recognition unit (13) is configured to extract character data of a phoneme or syllable of the unknown-word, to calculate a distance of a characteristic amount between the unknown-word and each of clusters of other unknown-words that are already stored in the second storage unit (14B) and to determine whether the unknown-word can be classified into an already existing cluster, based on whether there is a cluster with the characteristic amount that is within a predetermined distance, and
if it is determined that there is a cluster with the characteristic amount that is within the predetermined distance and the unknown-word can be classified into the already existing cluster, the storage control unit (13') is configured to classify the unknown-word in accordance with the distance of the characteristic amount calculated by the voice recognition unit (13) in the cluster with the shortest distance of the characteristic amount, and to successively store the character data of the phoneme or syllable of the classified unknown-word in the cluster with the shortest distance of the characteristic amount in the second storage unit (14B),
if it is determined that there is no cluster with characteristic amount that is within the predetermined distance and the unknown-word cannot be classified into the already existing cluster, the voice recognition unit (13) is configured to generate a new cluster in the unknown-word storage unit (14B) and to control the storage control unit (13') to store the character data of the phoneme or syllable of the unknown-word in the generated cluster, and
the storage control unit (13') is configured to store, when information of a number of unknown-words which are recognized to be in an identical classification, among the unknown-words classified and stored in the second storage unit (14B), meets a predetermined condition, a corresponding unknown-word in the first storage unit (14A) as a known-word by executing voice recognition, in units of pronunciation, on the character data of unknown-words in the corresponding cluster and storing, in the first storage unit (14A) data indicative of pronunciations of the unknown-words.

2. The voice processing apparatus according to claim 1, **characterized in that** the storage control unit (13') is configured to store, when a total number of unknown-words which are recognized to be in an identical classification, among the unknown-words classified and stored in the second storage unit (14B), meets a predetermined condition, a corresponding unknown-word in the first storage unit (14A) as a known-word.

3. The voice processing apparatus according to claim 1, **characterized in that** the storage control unit (13') is configured to store, when an absolute value of a number of unknown-words which are recognized to be in an identical classification, among the unknown-words classified and stored in the second storage unit (14B), meets a predetermined condition, a corresponding unknown-word in the first storage unit (14A) as a known-word.

4. The voice processing apparatus according to claim 1, **characterized in that** the storage control unit (13') is configured to store, when information of a number of unknown-words which are recognized to be in an identical classification, among the unknown-words classified and stored in the second storage unit (14B), meets a predetermined condition at a preset time instant, a corresponding unknown-word in the first storage unit (14A) as a known-word.

5. The voice processing apparatus according to any one of claims 1 to 4, **characterized in that**:
the voice recognition unit (13) is configured to recognize a speaker from input voice information, and
the storage control unit (13') is configured to classify the extracted unknown-words, based on a degree of similarity, in accordance with the speaker recognized by the voice recognition unit (13), and to successively store the classified unknown-words in the second storage unit (14B).

6. A voice processing method for use in a voice processing apparatus including a first storage unit (14A) which stores a known-word, the method comprising:
a voice recognition step (S101-S102) of extracting an unknown-word by executing a voice recognition process on an input voice signal, based on a storage content of the first storage unit (14A); and
a storage control step (S103-S107) of executing storage control to the first storage unit (14A), wherein the storage control step includes storing, when information of a number of unknown-words which are recognized to be identical, among unknown-words extracted by the voice recognition step, meets a predetermined condition, a corresponding unknown-word in the first storage unit (14A) as a known-word;
wherein in the storage control step (S103-S107), storage control to a second storage unit (14B) is executed, and the unknown-words extracted by the voice recognition unit (13) are classified, wherein
in the voice recognition step (S101-S102), character data of a phoneme or syllable of the unknown-word is extracted, a distance of a characteristic amount between the unknown-word and each of clusters of other unknown-words that are already stored in the second storage unit (14B) is calculated and it is determined whether the unknown-word can be classified into an already existing cluster, based on whether there is a cluster with the characteristic amount that is within a predetermined distance, and in the storage control step (S103-S107),
if it is determined that there is a cluster with the characteristic amount that is within the predetermined distance and the unknown-word can be classified into the already existing cluster, the unknown word is classified in accordance with the distance of the characteristic amount calculated in the voice recognition step (S101-S102) in the cluster with the shortest distance of the characteristic amount, the character data of the phoneme or syllable of the classified unknown-word is successively stored in the cluster with the shortest distance of the characteristic amount in the second storage unit (14B), if it is determined that there is no cluster with characteristic amount that is within the predetermined distance and the unknown-word cannot be classified into the already existing cluster, a new cluster is generated in the unknown-word storage unit (14B) and the character data of the phoneme or syllable of the unknown-word is stored in the generated cluster, and,
when information of a number of unknown-words which are recognized to be in an identical classification, among the unknown-words classified and stored in the second storage unit (14B), meets a predetermined condition, a corresponding unknown-word is stored in the first storage unit (14A) as a known-word by executing voice recognition, in units of pronunciation, on the character data of unknown-words in the corresponding cluster and storing, in the first storage unit (14A) data indicative of pronunciations of the unknown-words.

7. A program causing a computer of a voice processing apparatus including a first storage unit (14A) which stores a known-word, to function as:
a voice recognition unit (13) which is configured to extract an unknown-word by executing a voice recognition process on an input voice signal, based on a storage content of the first storage unit (14A); and
a storage control unit (13') which is configured to execute storage control to the first storage unit (14A),
wherein the storage control unit (13') is configured to store, when information of a number of unknown-words which are recognized to be identical, among unknown-words extracted by the voice recognition unit (13), meets a predetermined condition, a corresponding unknown-word in the first storage unit (14A) as a known-word;
a second storage unit (14B);
wherein the storage control unit (13') further is configured to execute storage control to the second storage unit (14B), and to classify the unknown-words extracted by the voice recognition unit (13),
wherein
the voice recognition unit (13) is configured to extract character data of a phoneme or syllable of the unknown-word, to calculate a distance of a characteristic amount between the unknown-word and each of clusters of other unknown-words that are already stored in the second storage unit (14B) and to determine whether the unknown-word can be classified into an already existing cluster, based on whether there is a cluster with the characteristic amount that is within a predetermined distance, and
if it is determined that there is a cluster with the characteristic amount that is within the predetermined distance and the unknown-word can be classified into the already existing cluster, the storage control unit (13') is configured to classify the unknown-word in accordance with the distance of the characteristic amount calculated by the voice recognition unit (13) in the cluster with the shortest distance of the characteristic amount, and to successively store the character data of the phoneme or syllable of the classified unknown-word in the cluster with the shortest distance of the characteristic amount in the second storage unit (14B),
if it is determined that there is no cluster with characteristic amount that is within the predetermined distance and the unknown-word cannot be classified into the already existing cluster, the voice recognition unit (13) is configured to generate a new cluster in the unknown-word storage unit (14B) and to control the storage control unit (13') to store the character data of the phoneme or syllable of the unknown-word in the generated cluster, and
the storage control unit (13') is configured to store, when information of a number of unknown-words which are recognized to be in an identical classification, among the unknown-words classified and stored in the second storage unit (14B), meets a predetermined condition, a corresponding unknown-word in the first storage unit (14A) as a known-word by executing voice recognition, in units of pronunciation, on the character data of unknown-words in the corresponding cluster and storing, in the first storage unit (14A) data indicative of pronunciations of the unknown-words.

## Patentansprüche

1. Sprachverarbeitungsvorrichtung, umfassend:
eine erste Speichereinheit (14A), die eingerichtet ist, ein bekanntes Wort zu speichern;
eine Spracherkennungseinheit (13), die eingerichtet ist, ein unbekanntes Wort zu extrahieren, indem ein Spracherkennungsvorgang auf ein eingegebenes Sprachsignal angewendet wird, auf Grundlage eines Speicherinhalts der ersten Speichereinheit (14A); und
eine Speichersteuereinheit (13'), die eingerichtet ist, eine Speichersteuerung der ersten Speichereinheit (14A) auszuführen,
wobei die Speichersteuereinheit (13') eingerichtet ist, wenn Information über eine Anzahl an unbekannten Wörtern, die als identisch erkannt werden, unter von der Spracherkennungseinheit (13) extrahierten unbekannten Wörtern, einer vorbestimmten Bedingung genügt, ein entsprechendes unbekanntes Wort in der ersten Speichereinheit (14A) als ein bekanntes Wort zu speichern;
eine zweite Speichereinheit (14B);
wobei die Speichersteuereinheit (13') ferner eingerichtet ist, eine Speichersteuerung der zweiten Speichereinheit (14B) auszuführen, und die von der Spracherkennungseinheit (13) extrahierten unbekannten Wörter zu klassifizieren, wobei
die Spracherkennungseinheit (13) eingerichtet ist, Zeichendaten eines Phonems oder einer Silbe des unbekannten Worts zu extrahieren, einen Abstand eines charakteristischen Betrags zwischen dem unbekannten Wort und jedes von Clustern anderer unbekannter Wörter, die bereits in der zweiten Speichereinheit (14B) gespeichert sind, zu berechnen, und zu bestimmen, ob das unbekannte Wort in einen bereits existierenden Cluster klassifiziert werden kann, auf Grundlage davon, ob es einen Cluster gibt mit dem charakteristischen Betrag, der innerhalb eines vorbestimmten Abstands liegt, und
wenn bestimmt wird, dass es einen Cluster mit dem charakteristischen Betrag, der innerhalb des vorbestimmten Abstands liegt, gibt und das unbekannte Wort in den bereits existierenden Cluster klassifiziert werden kann, die Speichersteuereinheit (13') eingerichtet ist, das unbekannte Wort entsprechend dem Abstand des charakteristischen Betrags, der von der Spracherkennungseinheit (13) berechnet wurde, in den Cluster mit dem kürzesten Abstand des charakteristischen Betrags zu klassifizieren, und nachfolgend die Zeichendaten des Phonems oder der Silbe des klassifizierten unbekannten Worts in den Cluster mit dem kürzesten Abstand des charakteristischen Betrags in der zweiten Speichereinheit (14B) zu speichern,
wenn bestimmt wird, dass es keinen Cluster mit charakteristischen Betrag, der innerhalb des vorbestimmten Abstands liegt, gibt und das unbekannte Wort nicht in den bereits existierenden Cluster klassifiziert werden kann, die Spracherkennungseinheit (13) eingerichtet ist, einen neuen Cluster in der Unbekanntes-Wort-Speichereinheit (14B) zu erzeugen und die Speichersteuereinheit (13') zu steuern, die Zeichendaten des Phonems oder der Silbe des unbekannten Worts in dem erzeugten Cluster zu speichern, und
die Speichersteuereinheit (13') eingerichtet ist, wenn Information über eine Anzahl an unbekannten Wörtern, die als in einer identischen Klassifizierung erkannt werden, unter den in der zweiten Speichereinheit (14B) klassifizierten und gespeicherten unbekannten Wörtern, einer vorbestimmten Bedingung genügt, ein entsprechendes unbekanntes Wort in der ersten Speichereinheit (14A) als ein bekanntes Wort zu speichern, indem Spracherkennung, in Ausspracheeinheiten, auf die Zeichendaten unbekannter Wörter in dem entsprechenden Cluster angewendet wird und Daten, die die Aussprache der unbekannten Wörter anzeigen, in der ersten Speichereinheit (14A) gespeichert werden.

2. Sprachverarbeitungsvorrichtung nach Anspruch 1, **dadurch gekennzeichnet, dass** die Speichersteuereinheit (13') eingerichtet ist, wenn eine Gesamtanzahl an unbekannten Wörtern, die als in einer identischen Klassifizierung erkannt werden, unter den klassifizierten und in der zweiten Speichereinheit (14B) gespeicherten unbekannten Wörtern, einer vorbestimmten Bedingung genügt, ein entsprechendes unbekanntes Wort in der ersten Speichereinheit (14A) als ein bekanntes Wort zu speichern.

3. Sprachverarbeitungsvorrichtung nach Anspruch 1, **dadurch gekennzeichnet, dass** die Speichersteuereinheit (13') eingerichtet ist, wenn ein Betragswert einer Anzahl an unbekannten Wörtern, die als in einer identischen Klassifizierung erkannt werden, unter den klassifizierten und in der zweiten Speichereinheit (14B) gespeicherten unbekannten Wörtern, einer vorbestimmten Bedingung genügt, ein entsprechendes unbekanntes Wort in der ersten Speichereinheit (14A) als ein bekanntes Wort zu speichern.

4. Sprachverarbeitungsvorrichtung nach Anspruch 1, **dadurch gekennzeichnet, dass** die Speichersteuereinheit (13') eingerichtet ist, wenn Information über eine Anzahl an unbekannten Wörtern, die als in einer identischen Klassifizierung erkannt werden, unter den klassifizierten und in der zweiten Speichereinheit (14B) gespeicherten unbekannten Wörtern, einer vorbestimmten Bedingung zu einem voreingestellten Zeitpunkt genügt, ein entsprechendes unbekanntes Wort in der ersten Speichereinheit (14A) als ein bekanntes Wort zu speichern.

5. Sprachverarbeitungsvorrichtung nach einem der Ansprüche 1 bis 4, **dadurch gekennzeichnet, dass**
die Spracherkennungseinheit (13) eingerichtet ist, einen Sprecher von eingegebener Sprachinformation zu erkennen, und
die Speichersteuereinheit (13') eingerichtet ist, die extrahierten unbekannten Wörter zu klassifizieren, auf Grundlage eines Ähnlichkeitsgrads, entsprechend dem von der Spracherkennungseinheit (13) erkannten Sprecher, und nachfolgend die klassifizierten unbekannten Wörter in der zweiten Speichereinheit (14B) zu speichern.

6. Sprachverarbeitungsverfahren zur Anwendung in einer Sprachverarbeitungsvorrichtung, die eine erste Speichereinheit (14A) enthält, die ein bekanntes Wort speichert, wobei das Verfahren umfasst:
einen Spracherkennungsschritt (S101-S102) des Extrahierens eines unbekannten Worts, indem ein Spracherkennungsvorgang auf ein eingegebenes Sprachsignal angewendet Wort, auf Grundlage eines Speicherinhalts der ersten Speichereinheit (14A); und
einen Speichersteuerschritt (S103-S107) des Ausführens einer Speichersteuerung der ersten Speichereinheit (14A), wobei der Speichersteuerschritt speichern enthält, wenn Information über eine Anzahl an unbekannten Wörtern, die als identisch erkannt werden, unter durch den Spracherkennungsschritt extrahierten unbekannten Wörtern, einer vorbestimmten Bedingung genügt, eines entsprechenden unbekannten Worts in der ersten Speichereinheit (14A) als ein bekanntes Wort;
wobei
in dem Speichersteuerschritt (S103-S107) eine Speichersteuerung einer zweiten Speichereinheit (14B) ausgeführt wird, und die von der Spracherkennungseinheit (13) extrahierten unbekannten Wörter klassifiziert werden, wobei
in dem Spracherkennungsschritt (S101-S102) Zeichendaten eines Phonems oder einer Silbe des unbekannten Worts extrahiert werden, ein Abstand eines charakteristischen Betrags zwischen dem unbekannten Wort und jedes von Clustern anderer unbekannter Wörter, die bereits in der zweiten Speichereinheit (14B) gespeichert sind, berechnet wird, und bestimmt wird, ob das unbekannte Wort in einen bereits existierenden Cluster klassifiziert werden kann, auf Grundlage davon, ob es einen Cluster gibt mit dem charakteristischen Betrag, der innerhalb eines vorbestimmten Abstands liegt, und
in dem Speichersteuerschritt (S103-S107),
wenn bestimmt wird, dass es einen Cluster mit dem charakteristischen Betrag, der innerhalb des vorbestimmten Abstands liegt, gibt und das unbekannte Wort in den bereits existierenden Cluster klassifiziert werden kann, das unbekannte Wort entsprechend dem Abstand des charakteristischen Betrags, der in dem Spracherkennungsschritt (S101-S102) berechnet wurde, in den Cluster mit dem kürzesten Abstand des charakteristischen Betrags klassifiziert wird, und die Zeichendaten des Phonems oder der Silbe des klassifizierten unbekannten Worts nachfolgend in dem Cluster mit dem kürzesten Abstand des charakteristischen Betrags in der zweiten Speichereinheit (14B) gespeichert wird,
wenn bestimmt wird, dass es keinen Cluster mit dem charakteristischen Betrag, der innerhalb des vorbestimmten Abstands liegt, gibt und das unbekannte Wort nicht in den bereits existierenden Cluster klassifiziert werden kann, ein neuen Cluster in der Unbekanntes-Wort-Speichereinheit (14B) erzeugt wird und die Zeichendaten des Phonems oder der Silbe des unbekannten Worts in dem erzeugten Cluster gespeichert werden, und,
wenn Information über eine Anzahl an unbekannten Wörtern, die als in einer identischen Klassifizierung erkannt werden, unter den in der zweiten Speichereinheit (14B) klassifizierten und gespeicherten unbekannten Wörtern, einer vorbestimmten Bedingung genügt, ein entsprechendes unbekanntes Wort in der ersten Speichereinheit (14A) als ein bekanntes Wort gespeichert wird, indem Spracherkennung, in Ausspracheeinheiten, auf die Zeichendaten unbekannter Wörter in dem entsprechenden Cluster angewendet wird und Daten, die die Aussprache der unbekannten Wörter anzeigen, in der ersten Speichereinheit (14A) gespeichert werden.

7. Programm, das einen Computer einer Sprachverarbeitungsvorrichtung, die eine erste Speichereinheit (14A) enthält, die ein unbekanntes Wort speichert, veranlasst, zu arbeiten als
eine Spracherkennungseinheit (13), die eingerichtet ist, ein unbekanntes Wort zu extrahieren, indem ein Spracherkennungsvorgang auf ein eingegebenes Sprachsignal angewendet wird, auf Grundlage eines Speicherinhalts der ersten Speichereinheit (14A); und
eine Speichersteuereinheit (13'), die eingerichtet ist, eine Speichersteuerung der ersten Speichereinheit (14A) auszuführen,
wobei die Speichersteuereinheit (13') eingerichtet ist, wenn Information über eine Anzahl an unbekannten Wörtern, die als identisch erkannt werden, unter von der Spracherkennungseinheit (13) extrahierten unbekannten Wörtern, einer vorbestimmten Bedingung genügt, ein entsprechendes unbekanntes Wort in der ersten Speichereinheit (14A) als ein bekanntes Wort zu speichern;
eine zweite Speichereinheit (14B);
wobei die Speichersteuereinheit (13') ferner eingerichtet ist, eine Speichersteuerung der zweiten Speichereinheit (14B) auszuführen, und die von der Spracherkennungseinheit (13) extrahierten unbekannten Wörter zu klassifizieren, wobei
die Spracherkennungseinheit (13) eingerichtet ist, Zeichendaten eines Phonems oder einer Silbe des unbekannten Worts zu extrahieren, einen Abstand eines charakteristischen Betrags zwischen dem unbekannten Wort und jedes von Clustern anderer unbekannter Wörter, die bereits in der zweiten Speichereinheit (14B) gespeichert sind, zu berechnen, und zu bestimmen, ob das unbekannte Wort in einen bereits existierenden Cluster klassifiziert werden kann, auf Grundlage davon, ob es einen Cluster gibt mit dem charakteristischen Betrag, der innerhalb eines vorbestimmten Abstands liegt, und
wenn bestimmt wird, dass es einen Cluster mit dem charakteristischen Betrag, der innerhalb des vorbestimmten Abstands liegt, gibt und das unbekannte Wort in den bereits existierenden Cluster klassifiziert werden kann, die Speichersteuereinheit (13') eingerichtet ist, das unbekannte Wort entsprechend dem Abstand des charakteristischen Betrags, der von der Spracherkennungseinheit (13) berechnet wurde, in den Cluster mit dem kürzesten Abstand des charakteristischen Betrags zu klassifizieren, und nachfolgend die Zeichendaten des Phonems oder der Silbe des klassifizierten unbekannten Worts in den Cluster mit dem kürzesten Abstand des charakteristischen Betrags in der zweiten Speichereinheit (14B) zu speichern,
wenn bestimmt wird, dass es keinen Cluster mit charakteristischen Betrag, der innerhalb des vorbestimmten Abstands liegt, gibt und das unbekannte Wort nicht in den bereits existierenden Cluster klassifiziert werden kann, die Spracherkennungseinheit (13) eingerichtet ist, einen neuen Cluster in der Unbekanntes-Wort-Speichereinheit (14B) zu erzeugen und die Speichersteuereinheit (13') zu steuern, die Zeichendaten des Phonems oder der Silbe des unbekannten Worts in dem erzeugten Cluster zu speichern, und
die Speichersteuereinheit (13') eingerichtet ist, wenn Information über eine Anzahl an unbekannten Wörtern, die als in einer identischen Klassifizierung erkannt werden, unter den in der zweiten Speichereinheit (14B) klassifizierten und gespeicherten unbekannten Wörtern, einer vorbestimmten Bedingung genügt, ein entsprechendes unbekanntes Wort in der ersten Speichereinheit (14A) als ein bekanntes Wort zu speichern, indem Spracherkennung, in Ausspracheeinheiten, auf die Zeichendaten unbekannter Wörter in dem entsprechenden Cluster angewendet wird und Daten, die die Aussprache der unbekannten Wörter anzeigen, in der ersten Speichereinheit (14A) gespeichert werden.

## Revendications

1. Appareil de traitement de la voix comprenant :
une première unité de stockage (14A) qui est configurée pour stocker un mot connu,
une unité de reconnaissance vocale (13) qui est configurée pour extraire un mot inconnu en exécutant un traitement de reconnaissance vocale sur un signal vocal en entrée sur la base d'un contenu de stockage de la première unité de stockage (14A), et
une unité de commande de stockage (13') qui est configurée pour exécuter une commande de stockage sur la première unité de stockage (14A),
dans lequel l'unité de commande de stockage (13') est configurée pour stocker un mot inconnu correspondant en tant que mot connu dans la première unité de stockage (14A), au moment où les informations sur un certain nombre de mots inconnus qui sont reconnus être identiques, parmi les mots inconnus extraits par l'unité de reconnaissance vocale (13), satisfont à une condition prédéterminée,
une seconde unité de stockage (14B),
dans lequel l'unité de commande de stockage (13') est en outre configurée pour exécuter une commande de stockage sur la seconde unité de stockage (14B) et pour classer les mots inconnus extraits par l'unité de reconnaissance vocale (13), où
l'unité de reconnaissance vocale (13) est configurée pour extraire des données de caractère d'un phonème ou d'une syllabe du mot inconnu, afin de calculer la distance d'une valeur caractéristique entre le mot inconnu et chacune des grappes d'autres mots inconnus qui sont déjà stockés dans la seconde unité de stockage (14B), et de déterminer si le mot inconnu peut être classé dans une grappe déjà existante, sur la base de ce qu'il existe une grappe comportant la valeur caractéristique qui se trouve à l'intérieur de la distance prédéterminée, et
s'il est déterminé qu'il existe une grappe comportant la valeur caractéristique qui se trouve à la distance prédéterminée et que le mot inconnu peut être classé dans la grappe déjà existante, l'unité de commande de stockage (13') est configurée pour classer le mot inconnu en fonction de la distance de la valeur caractéristique calculée par l'unité de reconnaissance vocale (13) dans la grappe présentant le distance la plus courte de la valeur caractéristique, ainsi que pour stocker successivement dans la seconde unité de stockage (14B) les données de caractère du phonème ou de la syllabe du mot inconnu classé dans la grappe présentant la distance la plus courte de la valeur caractéristique,
s'il est déterminé qu'il n'existe aucune grappe comportant la valeur caractéristique qui se trouve à la distance prédéterminée et que le mot inconnu ne peut pas être classé dans la grappe déjà existante, l'unité de reconnaissance vocale (13) est configurée pour générer une nouvelle grappe dans l'unité de stockage de mots inconnus (14B) et pour commander l'unité de commande de stockage (13') pour qu'elle stocke les données de caractère du phonème ou de la syllabe du mot inconnu dans la grappe générée, et
l'unité de commande de stockage (13') est configurée pour stocker un mot inconnu correspondant dans la première unité de stockage (14A) en tant que mot connu en exécutant une reconnaissance vocale en unités de prononciation, sur les données de caractère de mots inconnus dans la grappe correspondante, au moment où les informations d'un certain nombre de mots inconnus, qui sont reconnus être dans une classification identique, parmi les mots inconnus classés et stockés dans la seconde unité de stockage (14B), satisfont à une condition prédéterminée, et pour stocker dans la première unité de stockage (14A) des données qui indiquent les prononciations des mots inconnus.

2. Appareil de traitement de la voix selon la revendication 1, **caractérisé en ce que** l'unité de commande de stockage (13') est configurée pour stocker un mot inconnu correspondant dans la première unité de stockage (14A) en tant que mot connu, lorsque le nombre total de mots inconnus, qui sont reconnus se trouver dans une classification identique, parmi les mots inconnus classés et stockés dans la seconde unité de stockage (14B), satisfait à une condition prédéterminée.

3. Appareil de traitement de la voix selon la revendication 1, **caractérisé en ce que** l'unité de commande de stockage (13') est configurée pour stocker un mot inconnu correspondant dans la première unité de stockage (14A) en tant que mot connu, lorsque la valeur absolue du nombre de mots inconnus, qui sont reconnus se trouver dans une classification identique, parmi les mots inconnus classés et stockés dans la seconde unité de stockage (14B), satisfait à une condition prédéterminée.

4. Appareil de traitement de la voix selon la revendication 1, **caractérisé en ce que** l'unité de commande de stockage (13') est configurée pour stocker un mot inconnu correspondant dans la première unité de stockage (14A) en tant que mot connu, lorsque les informations concernant un certain nombre de mots inconnus qui sont reconnus se trouver dans une classification identique, parmi les mots inconnus classés et stockés dans la seconde unité de stockage (14B), satisfont à une condition prédéterminée.

5. Appareil de traitement de la voix selon l'une quelconque des revendications 1 à 4, **caractérisé en ce que** :
l'unité de reconnaissance vocale (13) est configurée pour reconnaître un locuteur à partir d'informations sur la voix en entrée, et
l'unité de commande de stockage (13') est configurée pour classer les mots inconnus extraits, sur la base d'un degré de similarité, en fonction du locuteur reconnu par l'unité de reconnaissance vocale (13), ainsi que pour stocker successivement les mots inconnus classés dans la seconde unité de stockage (14B).

6. Procédé de traitement de la voix destinée à être utilisé dans un appareil de traitement de la voix incluant une première unité de stockage (14A) qui stocke un mot connu, le procédé comprenant :
une étape de reconnaissance vocale (S101 à S102) consistant à extraire un mot inconnu en exécutant un traitement de reconnaissance vocale sur un signal vocal en entrée sur la base d'un contenu de stockage de la première unité de stockage (14A), et
une étape de commande de stockage (S103 à S107) consistant à exécuter une commande de stockage sur la première unité de stockage (14A), l'étape de commande de stockage incluant le stockage d'un mot inconnu correspondant en tant que mot connu dans la première unité de stockage (14A), au moment où les informations sur un certain nombre de mots inconnus qui sont reconnus être identiques, parmi les mots inconnus extraits par l'étape de reconnaissance vocale, satisfont à une condition prédéterminée,
dans lequel lors de l'étape de commande de stockage (S103 à S107) est exécutée une commande de stockage sur une seconde unité de stockage (14B) et les mots inconnus extraits par l'unité de reconnaissance vocale (13) sont classés, où
lors de l'étape de reconnaissance vocale (S101 à S102), des données de caractère d'un phonème ou d'une syllabe du mot inconnu sont extraites, la distance d'une valeur caractéristique entre le mot inconnu et chacune des grappes d'autres mots inconnus qui sont déjà stockés dans la seconde unité de stockage (14B) est calculée, et il est déterminé si le mot inconnu peut être classé dans une grappe déjà existante, sur la base de ce qu'il existe une grappe comportant la valeur caractéristique qui se trouve à l'intérieur de la distance prédéterminée, et
lors de l'étape de commande de stockage (S103 à S107),
s'il est déterminé qu'il existe une grappe comportant la valeur caractéristique qui se trouve à la distance prédéterminée et que le mot inconnu peut être classé dans la grappe déjà existante, le mot inconnu est classé en fonction de la distance de la valeur caractéristique calculée lors de l'étape de reconnaissance vocale (S101 à S102) dans la grappe présentant la distance la plus courte de la valeur caractéristique, les données de caractère du phonème ou de la syllabe du mot inconnu classé sont successivement stockées dans la seconde unité de stockage (14B) dans la grappe présentant la distance la plus courte de la valeur caractéristique,
s'il est déterminé qu'il n'existe aucune grappe comportant la valeur caractéristique qui se trouve à la distance prédéterminée et que le mot inconnu ne peut pas être classé dans la grappe déjà existante, une nouvelle grappe est générée dans l'unité de stockage de mots inconnus (14B) et les données de caractère du phonème ou de la syllabe du mot inconnu sont stockées dans la grappe générée, et
un mot inconnu correspondant est stocké dans la première unité de stockage (14A) en tant que mot connu en exécutant une reconnaissance vocale en unités de prononciation, sur les données de caractère de mots inconnus dans la grappe correspondante, lorsque les informations d'un certain nombre de mots inconnus, qui sont reconnus être dans une classification identique, parmi les mots inconnus classés et stockés dans la seconde unité de stockage (14B), satisfont à une condition prédéterminée, et il est stocké dans la première unité de stockage (14A) des données qui indiquent les prononciations des mots inconnus.

7. Programme amenant un ordinateur d'appareil de traitement de la voix incluant une première unité de stockage (14A) qui stocke un mot connu, à fonctionner comme :
une unité de reconnaissance vocale (13) qui est configurée pour extraire un mot inconnu en exécutant un traitement de reconnaissance vocale sur un signal vocal en entrée, sur la base d'un contenu de stockage de la première unité de stockage (14A), et
une unité de commande de stockage (13') qui est configurée pour exécuter une commande de stockage sur la première unité de stockage (14A),
dans lequel l'unité de commande de stockage (13') est configurée pour stocker un mot inconnu correspondant en tant que mot connu dans la première unité de stockage (14A), lorsque les informations sur un certain nombre de mots inconnus qui sont reconnus être identiques, parmi les mots inconnus extraits par l'unité de reconnaissance vocale (13), satisfont à une condition prédéterminée,
une seconde unité de stockage (14B),
dans lequel l'unité de commande de stockage (13') est en outre configurée pour exécuter une commande de stockage sur la seconde unité de stockage (14B) et pour classer les mots inconnus extraits par l'unité de reconnaissance vocale (13), où
l'unité de reconnaissance vocale (13) est configurée pour extraire des données de caractère d'un phonème ou d'une syllabe du mot inconnu, afin de calculer la distance d'une valeur caractéristique entre le mot inconnu et chacune des grappes d'autres mots inconnus qui sont déjà stockés dans la seconde unité de stockage (14B), et de déterminer si le mot inconnu peut être classé dans une grappe déjà existante, sur la base de ce qu'il existe une grappe comportant la valeur caractéristique qui se trouve à l'intérieur de la distance prédéterminée, et
s'il est déterminé qu'il existe une grappe comportant la valeur caractéristique qui se trouve à la distance prédéterminée et que le mot inconnu peut être classé dans la grappe déjà existante, l'unité de commande de stockage (13') est configurée pour classer le mot inconnu en fonction de la distance de la valeur caractéristique calculée par l'unité de reconnaissance vocale (13) dans la grappe présentant le distance la plus courte de la valeur caractéristique, ainsi que pour stocker successivement dans la seconde unité de stockage (14B) les données de caractère du phonème ou de la syllabe du mot inconnu classé dans la grappe présentant la distance la plus courte de la valeur caractéristique,
s'il est déterminé qu'il n'existe aucune grappe comportant la valeur caractéristique qui se trouve à la distance prédéterminée et que le mot inconnu ne peut pas être classé dans la grappe déjà existante, l'unité de reconnaissance vocale (13) est configurée pour générer une nouvelle grappe dans l'unité de stockage de mots inconnus (14B) et pour commander l'unité de commande de stockage (13') pour qu'elle stocke les données de caractère du phonème ou de la syllabe du mot inconnu dans la grappe générée, et
l'unité de commande de stockage (13') est configurée pour stocker un mot inconnu correspondant dans la première unité de stockage (14A) en tant que mot connu en exécutant une reconnaissance vocale en unités de prononciation, sur les données de caractère de mots inconnus dans la grappe correspondante, lorsque les informations d'un certain nombre de mots inconnus, qui sont reconnus être dans une classification identique, parmi les mots inconnus classés et stockés dans la seconde unité de stockage (14B), satisfont à une condition prédéterminée, et pour stocker dans la première unité de stockage (14A) des données qui indiquent les prononciations des mots inconnus.
